# EUROPEAN PATENT APPLICATION

(11) **EP 4 733 183 A1**
(43) Date of publication of application: **29.04.2026**
(21) Application number: 24920387.8
(22) Date of filing: 22.01.2024
(51) Int. Cl.: B62J 45/423, B60C 23/04, B62J 45/414

(54) **TRANSMITTER, RECEIVER, TRANSMISSION/RECEPTION SYSTEM, AND WHEEL POSITION DETERMINATION METHOD**

(71) Applicant: Pacific Industrial Co., Ltd., Ogaki-shi, Gifu 503-8603 (JP)
(72) Inventor: SUGINO, Takumi, Ogaki-shi, Gifu 503-8603 (JP)
(74) Representative: Daub, Thomas
(86) International application number: PCT/JP2024/001628
(87) International publication number: WO 2025/158495

(57) **Abstract**

A receiver (40) receives transmission data transmitted from a transmitter (21) mounted to each of two wheel assemblies (11, 12) of a two-wheeled vehicle (10). Each of the transmitters (21) includes an acceleration sensor (24) configured to detect acceleration in a Z-axis direction that is a centrifugal direction of the wheel assembly (11, 12). The receiver (40) includes a reception control unit (41). The reception control unit (41) determines that the two-wheeled vehicle (10) is stopped, obtains the acceleration detected by the acceleration sensor (24) from the transmission data received by the receiver (40) after the two-wheeled vehicle (10) is stopped, and determines, based on the acceleration, which of the wheel assemblies (11, 12) mounts each of the transmitters (21).

## Description

### TECHNICAL FIELD

The present disclosure relates to a transmitter, a receiver, a transmission/reception system, and a wheel position determination method.

### BACKGROUND ART

Patent Literature 1 discloses a transmission/reception system is mounted on a vehicle. The vehicle includes multiple wheel assemblies and detection units that respectively detect rotation angles of the wheel assemblies. The transmission/reception system includes transmitters and a receiver. Each wheel assembly is equipped with one of the transmitters. Each transmitter transmits transmission data at predetermined specific angles. The receiver obtains the rotation angle of each wheel assembly from a detection result of the detection unit upon reception of the transmission data. The receiver determines which of the wheels mounts each transmitter based on variations in the rotation angles of the respective wheel assemblies at the time of reception of the transmission data.

### CITATION LIST

### Patent Literature

Patent Literature 1: JP2014-227124A

### SUMMARY OF INVENTION

### Technical Problem

The transmission/reception system may be provided in a two-wheeled vehicle. In such a case, it may be desirable to determine which of the wheels mounts each transmitter.

### Solution to Problem

In accordance with a first aspect of the present disclosure, a receiver is configured to receive transmission data transmitted from a transmitter mounted to each of two wheel assemblies of a two-wheeled vehicle. Each of the transmitters includes an acceleration sensor configured to detect an acceleration in a Z-axis direction that is a centrifugal direction of the wheel assembly. The receiver includes a reception control unit. The reception control unit is configured to determine that the two-wheeled vehicle is stopped, obtain the acceleration detected by the acceleration sensor from the transmission data received by the receiver after the two-wheeled vehicle is stopped, and determine, based on the acceleration, which of the wheel assemblies mounts each of the transmitters.

When the two-wheeled vehicle is parked, the front wheel assembly is steered. Because the front wheel assembly of the two-wheeled vehicle is supported with a caster angle, steering the front wheel assembly produces a difference between acceleration detected by an acceleration sensor provided in the transmitter mounted to the front wheel assembly and acceleration detected by an acceleration sensor provided in the transmitter mounted to the rear wheel assembly. By utilizing this difference, the reception control unit determines which wheel assembly each transmitter is mounted to.

In the above-described receiver, each acceleration sensor is configured to detect an acceleration in a Y-axis direction that is an axial direction of the corresponding wheel assembly. The reception control unit is configured to obtain an acceleration in the Y-axis direction from the transmission data received by the receiver after the two-wheeled vehicle is stopped, and determine that the front wheel assembly mounts the transmitter including the acceleration sensor that detects a greater absolute value of the acceleration in the Y-axis direction.

**In** the above-described receiver, the two-wheeled vehicle includes detection units configured to detect rotation angles of the wheel assemblies. The reception control unit is configured to obtain an acceleration in the Z-axis direction from the transmission data received by the receiver after the two-wheeled vehicle is stopped, obtain the rotation angle from each detection unit after the two-wheeled vehicle is stopped, and determine which wheel assembly mounts each transmitter by comparing the acceleration in the Z-axis direction obtained from the transmission data with a map correlating the rotation angle with the acceleration in the Z-axis direction.

In the above-described receiver, each acceleration sensor is configured to detect an acceleration in a Y-axis direction that is an axial direction of the corresponding wheel assembly. The reception control unit is configured to obtain an acceleration in the Y-axis direction from the transmission data received by the receiver after the two-wheeled vehicle is stopped, and determine that the front wheel assembly mounts the transmitter including the acceleration sensor that detects acceleration in the Y-axis direction having an absolute value greater than or equal to a front wheel determination threshold.

In accordance with a second aspect of the present disclosure, a receiver is configured to receive transmission data transmitted from a transmitter mounted to each of two wheel assemblies of a two-wheeled vehicle. The two-wheeled vehicle includes a center stand. Each of the transmitters includes an acceleration sensor configured to detect an acceleration in a Z-axis direction that is a centrifugal direction of the wheel assembly. The receiver includes a reception control unit. The reception control unit is configured to determine that the two-wheeled vehicle is stopped, obtain an acceleration in the Z-axis direction from the transmission data received by the receiver after the two-wheeled vehicle is stopped, and determine that the rear wheel assembly mounts the transmitter including the acceleration sensor that detects the acceleration in the Z-axis direction, which changes after the vehicle is stopped.

When the two-wheeled vehicle is equipped with a center stand, parking the two-wheeled vehicle causes the rear wheel assembly to transition from a grounded state to a non-grounded state. As the rear wheel spins freely, the acceleration in the Z-axis direction varies. Since the front wheel assembly does not rotate, only the acceleration in the Z-axis direction detected by the acceleration sensor provided in the transmitter of the rear wheel assembly varies. This allows the reception control unit to determine that the rear wheel mounts the transmitter including the acceleration sensor that detects acceleration in the Z-axis direction, which changes after the vehicle is stopped. Accordingly, the reception control unit is capable of determining which wheel assembly mounts each transmitter.

In accordance with a third aspect of the present disclosure, a transmitter mounted to each of two wheel assemblies of a two-wheeled vehicle includes an acceleration sensor configured to detect an acceleration in a Y-axis direction that is an axial direction of the wheel assembly and an acceleration in a Z-axis direction that is a centrifugal direction of the wheel assembly, and a transmission control unit. The transmission control unit is configured to detect the acceleration in the Y-axis direction when the acceleration in the Z-axis direction is less than a threshold, and transmit transmission data including the acceleration in the Y-axis direction to a receiver, thereby causing the receiver to determine, based on the acceleration in the Y-axis direction, which of the wheels mounts the transmitter.

When the transmission control unit transmits the transmission data including the acceleration in the Y-axis direction to the receiver, the receiver can determine which wheel assembly mounts the transmitter.
In accordance with a fourth aspect of the present disclosure, a transmitter mounted to each of two wheel assemblies of a two-wheeled vehicle includes an acceleration sensor configured to detect an acceleration in a Y-axis direction that is an axial direction of the wheel assembly and an acceleration in a Z-axis direction that is a centrifugal direction of the wheel assembly, and a transmission control unit. The transmission control unit is configured to determine that the two-wheeled vehicle is stopped based on the acceleration in the Z-axis direction, obtain the acceleration in the Y-axis direction from the acceleration sensor after the two-wheeled vehicle is stopped, and determine whether an absolute value of the acceleration in the Y-axis direction is greater than or equal to a front wheel determination threshold, and transmit a determination result to a receiver.

When the two-wheeled vehicle is parked, the front wheel assembly is steered. Thus, the acceleration in the Y-axis direction detected by the acceleration sensor provided in the transmitter of the front wheel assembly is greater than the acceleration in the Y-axis direction detected by the acceleration sensor provided in the transmitter of the rear wheel assembly. Accordingly, by determining whether the absolute value of the acceleration in the Y-axis direction is greater than or equal to the front wheel determination threshold, it is possible to determine whether the transmitter is mounted to the front wheel assembly or the rear wheel assembly. Transmitting the determination result to the receiver allows the receiver to determine which wheel assembly mounts each transmitter.

In accordance with a fifth aspect of the present disclosure, a transmission/reception system includes a transmitter mounted to each of two wheel assemblies of a two-wheeled vehicle, and a receiver configured to receive transmission data transmitted from the transmitter. Each of the transmitters includes an acceleration sensor configured to detect an acceleration in a Z-axis direction that is a centrifugal direction of the wheel assembly. The receiver includes a reception control unit. The reception control unit is configured to determine that the two-wheeled vehicle is stopped, obtain the acceleration detected by the acceleration sensor from the transmission data received by the receiver after the two-wheeled vehicle is stopped, and determine, based on the acceleration, which of the wheel assemblies mounts each of the transmitters.

A difference arises between the acceleration detected by the acceleration sensor provided in the transmitter mounted on the front wheel assembly and the acceleration detected by the acceleration sensor provided in the transmitter mounted on the rear wheel assembly. By utilizing this difference, the reception control unit determines which wheel assembly mounts each transmitter.

In accordance with a sixth aspect of the present disclosure, a wheel position determination method of determining, using a receiver, which of two wheel assemblies of a two-wheeled vehicle mounts a transmitter mounted on each of the two wheel assemblies is provided. The method includes transmitting, by each of the transmitters, transmission data including acceleration, receiving, by the receiver, the transmission data, determining, by the receiver, that the two-wheeled vehicle is stopped, obtaining, by the receiver, the acceleration from the transmission data received by the receiver after the two-wheeled vehicle is stopped, and determining, by the receiver, based on the acceleration, which of the wheel assemblies mounts each of the transmitters.

A difference arises between the acceleration detected by the acceleration sensor provided in the transmitter mounted on the front wheel assembly and the acceleration detected by the acceleration sensor provided in the transmitter mounted on the rear wheel assembly. By utilizing this difference, the receiver determines which wheel assembly mounts each transmitter.

### BRIEF DESCRIPTION OF DRAWINGS

[Fig. 1] Fig. 1 is a perspective view of a two-wheeled vehicle.
[Fig. 2] Fig. 2 is a side view of the two-wheeled vehicle.
[Fig. 3] Fig. 3 is a perspective view of a transmitter.
[Fig. 4] Fig. 4 is a schematic diagram of a configuration of a transmission/reception system.
[Fig. 5] Fig. 5 is a flowchart showing transmission control.
[Fig. 6] Fig. 6 is a flowchart showing a wheel position determination control.
[Fig. 7] Fig. 7 is a diagram showing a front wheel assembly and a rear wheel assembly in a state in which a handlebar lock mechanism is engaged.
[Fig. 8] Fig. 8 is a graph showing relationships between wheel angles and accelerations detected by acceleration sensors.
[Fig. 9] Fig. 9 is a flowchart showing a transmitter-side wheel position determination control.
[Fig. 10] Fig. 10 is a graph showing relationships between wheel angles and accelerations detected by acceleration sensors.

### DESCRIPTION OF EMBODIMENTS

### [First Embodiment]

A transmitter, a receiver, a transmission/reception system, and a wheel position determination method according to a first embodiment will now be described.

### <Two-Wheeled Vehicle>

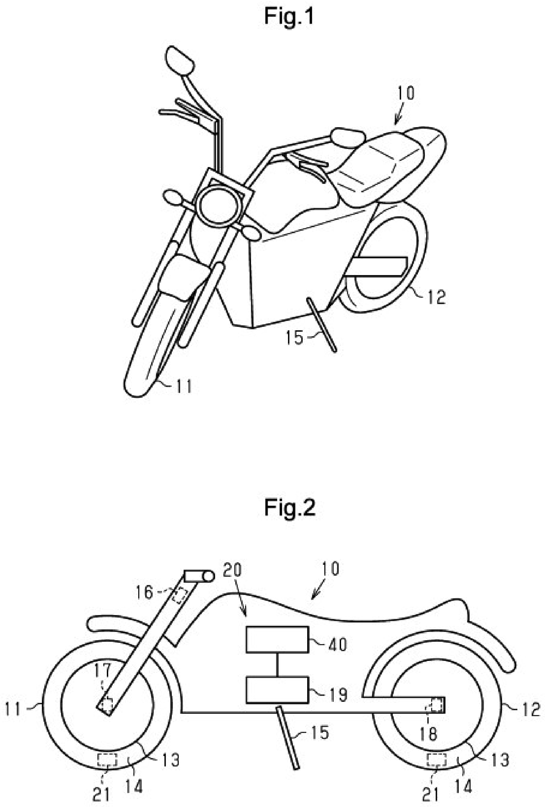

As shown in Figs. 1 and 2, a two-wheeled vehicle 10 includes two wheel assemblies 11, 12, a stand 15, and a handlebar lock mechanism 16. Each of the wheel assemblies 11, 12 includes a wheel 13 and a tire 14 mounted to the wheel 13. The two wheel assemblies 11, 12 include a front wheel assembly 11 and a rear wheel assembly 12. The stand 15 supports the two-wheeled vehicle 10 when the two-wheeled vehicle 10 is stopped. The stand 15 is a side stand. The handlebar lock mechanism 16 prohibits rotation of the handlebar by, for example, locking the handlebar with a lock pin.

The two-wheeled vehicle 10 includes detection units 17, 18, which detect rotation angles of the wheel assemblies 11, 12, and a vehicle controller 19, which obtains detection results of the detection units 17, 18. Each of the wheel assemblies 11, 12 is equipped with one of the detection units 17, 18. The detection unit 17 corresponding to the front wheel assembly 11 is a first detection unit 17. The detection unit 18 corresponding to the rear wheel assembly 12 is a second detection unit 18. The detection units 17, 18 generate pulses by rotations of rotors that rotate integrally with the wheel assemblies 11, 12. Each rotor is, for example, a gear having teeth provided at equal angular intervals. Each time the rotor makes one rotation, a predetermined number of pulses are generated in the detection unit 17, 18. If the rotor is a gear, the same number of pulses as the number of teeth are generated in the detection unit 17, 18 by one rotation of the rotor.

The vehicle controller 19 includes, for example, a microcomputer or the like. The vehicle controller 19 obtains pulses of the detection units 17, 18. The vehicle controller 19 counts rising edges and falling edges of the pulses generated by the detection units 17, 18. The vehicle controller 19 calculates, as a pulse count value, a remainder obtained by dividing the counted number of pulses by the number of pulses generated during one rotation of the rotor. Since the number of pulses generated in each of the detection units 17, 18 during one rotation of the rotor is fixed, the rotation angle of each of the wheel assemblies 11, 12 can be obtained from the pulse count value. The rotation angles of the wheel assemblies 11, 12 are absolute angles. The absolute angle refers to an angle measured from a reference position of the rotor. The reference position of the rotor can be identified, for example, by forming at least one of the gear teeth into a special shape. As appropriate, the rotation angles of the wheel assemblies 11, 12 are referred to as wheel angles. The detection units 17, 18 are, for example, wheel speed sensors used in an antilock brake system provided in the two-wheeled vehicle 10.

### <Transmission/Reception System>

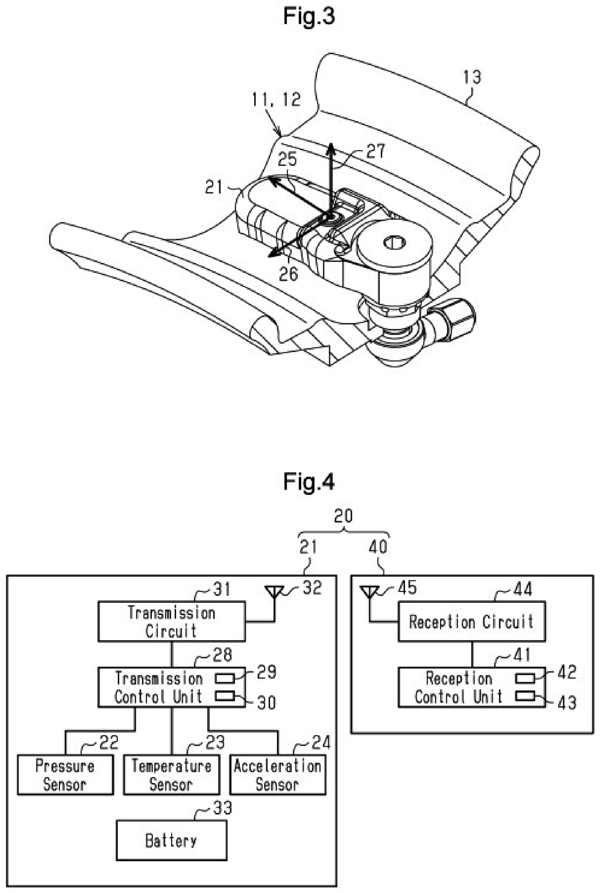

The two-wheeled vehicle 10 includes a transmission/reception system 20. The transmission/reception system 20 includes transmitters 21, each mounted to one of the wheel assemblies 11, 12, and a receiver 40. The transmitters 21 are mounted to the wheel assemblies 11, 12 so as to be disposed in the internal spaces of the tires 14. The transmitter 21 may be fixed to the tire valve, the wheel 13, or the tire 14. As shown in Fig. 3, the transmitter 21 is fixed to the tire valve in the present embodiment. The transmitter 21 detects the condition of the corresponding tire 14 and wirelessly transmits transmission data including detected information of the tire 14 to the receiver 40. The transmission/reception system 20 monitors the condition of the tire 14 by receiving the transmission data transmitted from the transmitter 21 through the receiver 40. The transmission/reception system 20 is a tire condition monitoring system.

As shown in Fig. 4, each transmitter 21 includes a pressure sensor 22, a temperature sensor 23, an acceleration sensor 24, a transmission control unit 28, a transmission circuit 31, a transmission antenna 32, and a battery 33. The transmitter 21 is driven by power supplied from the battery 33. The transmission control unit 28 performs overall control of the operation of the transmitter 21. The battery 33, which is the power source of the transmitter 21, may be a primary battery or a power storage device such as a rechargeable battery or a capacitor.

The pressure sensor 22 detects the air pressure of the corresponding tire 14. The temperature sensor 23 detects the internal temperature of the corresponding tire 14.

As shown in Fig. 3, the acceleration sensor 24 is a triaxial acceleration sensor. The acceleration sensor 24 detects acceleration along an X-axis 25, a Y-axis 26, and a Z-axis 27. The X-axis 25, the Y-axis 26, and the Z-axis 27 are mutually orthogonal. The Y-axis 26 extends in the axial direction of each of the wheel assemblies 11, 12. The axial direction of each of the wheel assemblies 11, 12 is a direction in which the central axis of the wheel assembly 11, 12 extends. The Z-axis 27 extends in a centrifugal direction of each of the wheel assemblies 11, 12. The centrifugal direction of each wheel assembly 11, 12 is a radially outward direction of the wheel assembly 11, 12. The X-axis 25 extends in a direction orthogonal to both the Y-axis 26 and the Z-axis 27.

The acceleration sensor 24 separately detects acceleration acting in three directions, i.e., an X-axis direction in which the X-axis 25 extends, a Y-axis direction in which the Y-axis 26 extends, and a Z-axis direction in which the Z-axis 27 extends. The acceleration in the Y-axis direction is referred to as Y-axis acceleration, and the acceleration in the Z-axis direction is referred to as Z-axis acceleration. The Y-axis acceleration is acceleration in the axial direction of each of the wheel assemblies 11, 12. The Z-axis acceleration is a centrifugal acceleration of each of the wheel assemblies 11, 12.

The transmission control unit 28 includes a processor 29 and a storage 30. The processor 29 may include, for example, a central processing unit (CPU), a graphics processing unit (GPU), or a digital signal processor (DSP). The storage 30 may include random access memory (RAM) and read-only memory (ROM). The storage 30 stores program codes or instructions configured to cause the processor to execute processes. The storage 30, or a computer-readable medium, includes any type of medium that is accessible by general-purpose computers or dedicated computers. The transmission control unit 28 may also be implemented by a hardware circuit such as an application specific integrated circuit (ASIC) or a field programmable gate array (FPGA). The transmission control unit 28, which acts as processing circuitry, may include one or more processors that run on computer programs, one or more hardware circuits such as an ASIC and an FPGA, or a combination of such devices. The storage 30 stores data serving as an ID code that indicates unique identification information for each transmitter 21.

The transmission control unit 28 generates transmission data and outputs the generated transmission data to the transmission circuit 31. The transmission data includes pressure data, temperature data, and the ID code. The pressure data indicates the pressure detected by the pressure sensor 22. The temperature data indicates the temperature detected by the temperature sensor 23. The transmission circuit 31 modulates the transmission data. The modulated transmission data is transmitted from the transmission antenna 32 as a wireless signal. The wireless signal is a signal including the transmission data. The wireless signal is a signal of a specified frequency band. The frequency band may be an LF band, an MF band, an HF band, a VHF band, a UHF band, and a 2.4 GHz band.

Transmission control performed by each transmission control unit 28 will be described.

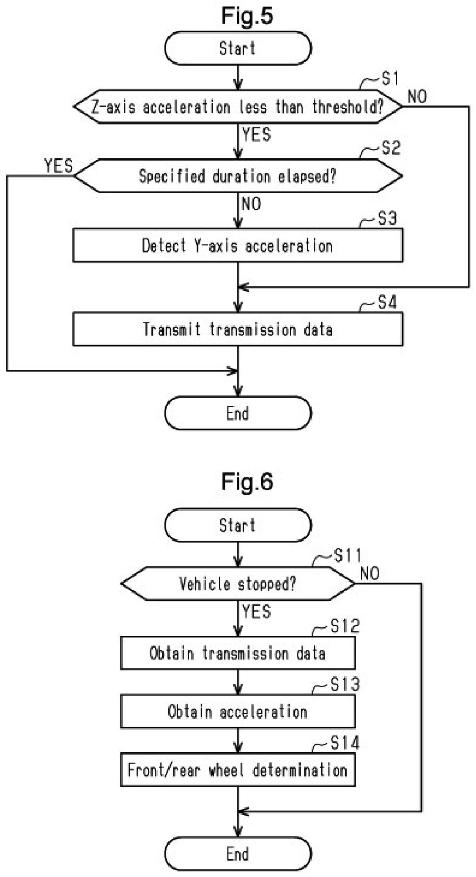

As shown in Fig. 5, in step S1, the transmission control unit 28 determines whether the Z-axis acceleration is less than a threshold. The threshold is set to determine whether the two-wheeled vehicle 10 is traveling. The centrifugal acceleration acting on the acceleration sensor 24 increases as the speed of the two-wheeled vehicle 10 increases. Accordingly, whether the two-wheeled vehicle 10 is traveling can be determined based on the Z-axis acceleration. The threshold is set to a value greater than the Z-axis acceleration in a state in which the two-wheeled vehicle 10 is in a stopped state, taking into account factors such as tolerance. When the Z-axis acceleration is less than the threshold, the two-wheeled vehicle 10 is in a stopped state. When the Z-axis acceleration is greater than or equal to the threshold, the two-wheeled vehicle 10 is traveling. If the determination result of step S1 is affirmative, the transmission control unit 28 proceeds to step S2. If the determination result of step S1 is negative, the transmission control unit 28 proceeds to step S4.

In step S2, the transmission control unit 28 determines whether stopped time, during which the two-wheeled vehicle 10 is in a stopped state, exceeds a specified duration. The specified duration can be set to any desired value. For example, the specified duration is set to be longer than a temporary stopped time due to a temporal stop of the two-wheeled vehicle 10 at a traffic light. When the determination result in step S1 is affirmative, the transmission control unit 28 starts measuring the stopped time. The transmission control unit 28 continues measuring the stopped time while the determination result of step S1 remains affirmative. When the determination result in step S1 becomes negative, the transmission control unit 28 resets the stopped time. If the determination result in step S2 is affirmative, the transmission control unit 28 terminates the transmission control. If the determination result of step S2 is negative, the transmission control unit 28 proceeds to step S3.

**In** step S3, the transmission control unit 28 detects the Y-axis acceleration. Specifically, the transmission control unit 28 detects the Y-axis acceleration when the two-wheeled vehicle 10 is stopped. **In** the present embodiment, the transmission control unit 28 detects the Y-axis acceleration when the two-wheeled vehicle 10 is in a stopped state and the stopped time of the two-wheeled vehicle 10 is less than the specified duration.

**In** step S4, the transmission control unit 28 transmits transmission data. When detecting the Y-axis acceleration in step S3, the transmission control unit 28 transmits transmission data including the Y-axis acceleration. When the result of the determination result of step S1 is negative, the transmission control unit 28 transmits transmission data that does not include the Y-axis acceleration. Accordingly, the transmission control unit 28 transmits transmission data that does not include the Y-axis acceleration while the two-wheeled vehicle 10 is traveling. The transmission control unit 28 transmits transmission data including the Y-axis acceleration until the specified duration elapses after the two-wheeled vehicle 10 is stopped.

As shown in Fig. 4, the receiver 40 includes a reception control unit 41, a reception circuit 44, and a reception antenna 45. The receiver 40 may be mounted on the two-wheeled vehicle 10, or may be a portable terminal carried by a rider of the two-wheeled vehicle 10.

The reception control unit 41 includes a processor 42 and a storage 43. The processor 42 is, for example, a CPU, a GPU, or a DSP. The storage 43 includes RAM and ROM. The storage 43 stores program codes or instructions configured to cause the processor 42 to execute processes. The storage 43, or a computer-readable medium, includes any type of medium that is accessible by general-purpose computers or dedicated computers. The reception control unit 41 may include a hardware circuit such as an ASIC or an FPGA. The reception control unit 41, which acts as processing circuitry, may include one or more processors that run on computer programs, one or more hardware circuits such as an ASIC and an FPGA, or a combination of such devices.

The reception control unit 41 is configured to obtain the wheel angles from the vehicle controller 19.

The reception circuit 44 demodulates wireless signals received from each of the transmitters 21 via the reception antenna 45 and outputs transmission data from the transmitters 21 to the reception control unit 41. Accordingly, the reception control unit 41 obtains the transmission data.

The reception control unit 41 obtains the pressure and the temperature in each tire 14, which represent the condition of the tire 14, based on the transmission data from the reception circuit 44. If an anomaly occurs in the tire 14, the reception control unit 41 may provide a notification to a rider of the two-wheeled vehicle 10. The notification may be provided, for example, by a display on an indicator, illumination of a warning lamp, or a warning sound generated by a buzzer.

In some cases, it is desired to determine which one of the two wheel assemblies 11, 12 includes the tire 14 to which the received transmission data corresponds. For example, when a pressure anomaly occurs in the tire 14 of one of the two wheel assemblies 11, 12, it may be desirable to provide a notification that distinguishes the tire 14 that has the anomaly. In such a case, it is required to determine one of the wheel assemblies 11, 12 to which the received transmission data corresponds. In other words, the reception control unit 41 needs to associate the ID codes of the respective transmitters 21 with the positions of the wheel assemblies 11, 12.

Wheel position determination control for determining which of the two wheel assemblies 11, 12 mounts each transmitter 21 to will now be described.

As shown in Fig. 6, in step S11, the reception control unit 41 determines whether the two-wheeled vehicle 10 is in a stopped state. Whether the two-wheeled vehicle 10 is in a stopped state can be determined based on, for example, the detection results of the detection units 17, 18. Whether the two-wheeled vehicle 10 is in a stopped state may be determined based on whether the Y-axis acceleration is provided in the transmission data. If the determination result of step S11 is negative, the reception control unit 41 terminates the wheel position determination control. If the determination result of step S11 is affirmative, the reception control unit 41 proceeds to step S12.

In step S12, the reception control unit 41 obtains transmission data. The transmission data obtained in step S12 is the transmission data received by the receiver 40 after the two-wheeled vehicle 10 is stopped.

Next, in step S13, the reception control unit 41 obtains accelerations from the transmission data obtained in step S12. In the present embodiment, the reception control unit 41 obtains the Y-axis accelerations from the transmission data obtained in step S12. The reception control unit 41 obtains the Y-axis acceleration from the transmission data transmitted from each of the two transmitters 21. Accordingly, the Y-axis acceleration acting on the front wheel assembly 11 and the Y-axis acceleration acting on the rear wheel assembly 12 are obtained.

Next, in step S14, the reception control unit 41 performs front/rear wheel determination. The front/rear wheel determination is a process of determining which of the wheel assemblies 11, 12 mounts each of the transmitters 21, based on the Y-axis accelerations obtained in step S13. In other words, the reception control unit 41 determines whether each of the transmitters 21 is mounted to the front wheel assembly 11 or the rear wheel assembly 12.

The transmission data transmitted by each transmitter 21 includes the Y-axis acceleration and the ID code. Therefore, the reception control unit 41 obtains the Y-axis acceleration in association with the ID code of each transmitter 21. The reception control unit 41 compares the absolute values of the Y-axis accelerations. The reception control unit 41 determines that the front wheel assembly 11 mounts the transmitter 21 including the acceleration sensor 24 that has detected the Y-axis acceleration having the greater absolute value. Specifically, the reception control unit 41 determines that the front wheel assembly 11 mounts the ID code associated with the greater absolute value of the Y-axis acceleration is the ID code of the transmitter 21. The reception control unit 41 determines that the ID code that is not determined to be the ID code of the transmitter 21 mounted to the front wheel assembly 11 is the ID code of the transmitter 21 mounted to the rear wheel assembly 12.

In step S14, the reception control unit 41 may determine that the rear wheel assembly 12 mounts the transmitter 21 including the acceleration sensor 24 that has detected the Y-axis acceleration having the lower absolute values. Specifically, the reception control unit 41 may determine that the ID code associated with the lower absolute value of the Y-axis acceleration is the ID code of the transmitter 21 mounted to the rear wheel assembly 12. The reception control unit 41 determines that the ID code that is not determined to be the ID code of the transmitter 21 mounted to the rear wheel assembly 12 is the ID code of the transmitter 21 mounted to the front wheel assembly 11. As described above, even when it is determined that the rear wheel assembly 12 mounts the transmitter 21 including the acceleration sensor 24 that has detected the Y-axis acceleration having the lower absolute value, it is eventually determined that the front wheel assembly 11 mounts the transmitter 21 including the acceleration sensor 24 that has detected the Y-axis acceleration having the greater absolute value.

Through the wheel position determination control, the ID code of the transmitter 21 mounted to the front wheel assembly 11 and the ID code of the transmitter 21 mounted to the rear wheel assembly 12 are identified. The reception control unit 41 stores the correspondence relationship between the wheel assemblies 11, 12 and the ID codes in the storage 43.

As described above, in the transmission/reception system 20, the transmission control unit 28 performs the transmission control, and the reception control unit 41 performs the wheel position determination control. Thus, the wheel position determination method is executed by the transmitters 21 and the receiver 40.

### [Operation of the First Embodiment]

When the two-wheeled vehicle 10 is parked, the ignition is turned off after the two-wheeled vehicle 10 is stopped. When the two-wheeled vehicle 10 is parked, the front wheel assembly 11 is steered. For example, when the handlebar is locked by the handlebar lock mechanism 16, the lock is engaged while the handlebar is in a steered position. The steering angle of the front wheel assembly 11 at this time is, for example, in a range of 40° to 50°.

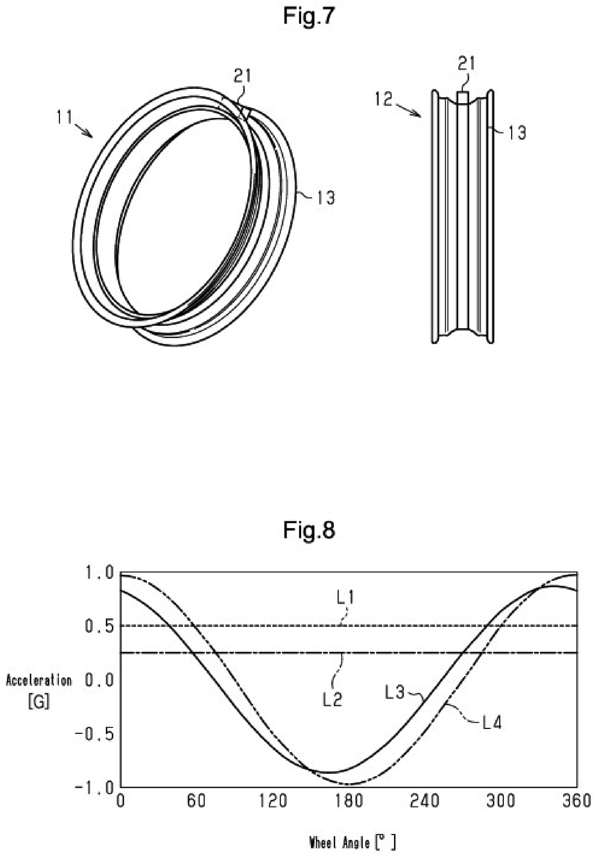

As shown in Fig. 7, in the two-wheeled vehicle 10, since the front wheel assembly 11 is supported with a caster angle, the central axis of the front wheel assembly 11 tilts with respect to the horizontal direction when the handlebar is steered. Accordingly, in a state in which the handlebar is locked by the handlebar lock mechanism 16, the central axis of the front wheel assembly 11 tilts with respect to the horizontal direction. By steering the handlebar, the central axis of the rear wheel assembly 12 does not tilt with respect to the horizontal direction, or, if it does tilt, the amount of tilt is smaller than that of the front wheel assembly 11. When the stand 15 is a side stand, the central axes of the wheel assemblies 11, 12 tilt with respect to the horizontal direction when the two-wheeled vehicle 10 is supported by the stand 15. In Fig. 7, the wheel assemblies 11, 12 are represented without considering tilts of the wheel assemblies 11, 12 due to the stand 15.

Fig. 8 shows the acceleration detected by the acceleration sensor 24 in a state in which the handlebar lock mechanism 16 is engaged. A line L1 indicates the Y-axis acceleration of the acceleration sensor 24 provided in the transmitter 21 of the front wheel assembly 11, and a line L2 indicates the Y-axis acceleration of the acceleration sensor 24 provided in the transmitter 21 of the rear wheel assembly 12. Since the central axis of the front wheel assembly 11 tilts with respect to the horizontal direction, a component of gravitational acceleration is detected along the Y-axis 26. Accordingly, the absolute value of the Y-axis acceleration detected by the acceleration sensor 24 provided in the transmitter 21 of the front wheel assembly 11 is greater than 0. Since the stand 15 is a side stand, the central axis of the rear wheel assembly 12 tilts with respect to the horizontal direction. Therefore, for the acceleration sensor 24 provided in the transmitter 21 of the rear wheel assembly 12, a component of gravitational acceleration is likewise detected along the Y-axis 26. However, the amount of tilt of the central axis of the rear wheel assembly 12 with respect to the horizontal direction is smaller than the amount of tilt of the central axis of the front wheel assembly 11 with respect to the horizontal direction. As a result, after the two-wheeled vehicle 10 is stopped, the absolute value of the Y-axis acceleration detected by the acceleration sensor 24 provided in the transmitter 21 of the front wheel assembly 11 becomes greater than the absolute value of the Y-axis acceleration detected by the acceleration sensor 24 provided in the transmitter 21 of the rear wheel assembly 12. Accordingly, the reception control unit 41 can determine, based on the Y-axis accelerations, whether each transmitter 21 is mounted to the front wheel assembly 11 or to the rear wheel assembly 12.

### [Advantages of the First Embodiment]

(1-1) When the two-wheeled vehicle 10 is parked, the front wheel assembly 11 is steered. Because the front wheel assembly 11 of the two-wheeled vehicle 10 is supported with a caster angle, steering the front wheel assembly 11 produces a difference between acceleration detected by the acceleration sensor 24 provided in the transmitter 21 mounted to the front wheel assembly 11 and acceleration detected by the acceleration sensor 24 provided in the transmitter 21 mounted to the rear wheel assembly 12. By utilizing this difference, the reception control unit 41 determines which of the wheel assemblies 11, 12 mounts each transmitter 21. Compared with a case in which the determination of which of the wheel assemblies 11, 12 mounts each transmitter 21 is made using variations in wheel angles obtained by the detection units 17 and 18, this configuration allows the determination to be performed in a simpler manner.
(1-2) The reception control unit 41 obtains the Y-axis acceleration from the transmission data received by the receiver 40 after the two-wheeled vehicle 10 is stopped. The reception control unit 41 determines that the front wheel assembly 11 mounts the transmitter 21 including the acceleration sensor 24 having the greater absolute value of the Y-axis acceleration. By utilizing the change in steering angle that occurs when the handlebar lock mechanism 16 is engaged, it is possible to determine whether each transmitter 21 is mounted to the front wheel assembly 11 or to the rear wheel assembly 12. Even when the two-wheeled vehicle 10 does not include the detection units 17 and 18, it is still possible to determine whether each transmitter 21 is mounted to the front wheel assembly 11 or to the rear wheel assembly 12.
(1-3) When the Z-axis acceleration is less than the threshold, the transmission control unit 28 detects the Y-axis acceleration and transmits transmission data including the Y-axis acceleration to the receiver 40. When each transmission control unit 28 transmits the transmission data including the Y-axis acceleration to the receiver 40, the receiver 40 can determine which of the wheel assemblies 11, 12 mounts each of the transmitters 21.

Since the wheel position determination control is performed after the two-wheeled vehicle 10 is stopped, it is not necessary to transmit the transmission data including the Y-axis acceleration to the receiver 40 while the two-wheeled vehicle 10 is traveling. When it is not necessary to transmit transmission data including the Y-axis acceleration, it is possible to reduce the power consumption of the battery 33 by not detecting the Y-axis acceleration.

### [Second Embodiment]

A transmitter, a receiver, a transmission/reception system, and a wheel position determination method according to a second embodiment will now be described. In the second embodiment, processes performed by the transmitters and the receiver are different from those in the first embodiment. The hardware configurations of the transmitters and the receiver are identical to those of the first embodiment.

Each transmission control unit 28 performs transmission control. In the transmission control, the transmission control unit 28 transmits transmission data including a Z-axis acceleration to the receiver 40. The transmission control unit 28 may transmit transmission data including a Z-axis acceleration to the receiver 40 only when the Z-axis acceleration is less than the threshold.

The reception control unit 41 performs wheel position determination control. In steps S11 and S12, the reception control unit 41 performs the same processes as in the first embodiment. In step S13, the reception control unit 41 obtains the Z-axis accelerations from the transmission data.

In step S14, the reception control unit 41 determines, based on the obtained Z-axis accelerations, which of the wheel assemblies 11, 12 mounts each transmitter 21. The reception control unit 41 obtains the wheel angles from the detection units 17 and 18. The reception control unit 41 determines which of the wheel assemblies 11, 12 mounts each transmitter 21 by comparing the wheel angles obtained from the detection units 17, 18 and the Z-axis accelerations obtained from the transmission data with a map that correlates wheel angles with Z-axis accelerations. The map is stored in a storage device readable by the reception control unit 41. The storage device is, for example, the storage 43.

In Fig. 8, a line L3 indicates the Z-axis acceleration of the acceleration sensor 24 provided in the transmitter 21 of the front wheel assembly 11, and a line L4 indicates the Z-axis acceleration of the acceleration sensor 24 provided in the transmitter 21 of the rear wheel assembly 12. As can be seen from Fig. 8, a difference occurs between the Z-axis acceleration detected by the acceleration sensor 24 provided in the transmitter 21 mounted to the front wheel assembly 11 and the Z-axis acceleration detected by the acceleration sensor 24 provided in the transmitter 21 mounted to the rear wheel assembly 12. Specifically, the phases of the sine waves each representing the correlations between wheel angle and Z-axis acceleration are shifted. In addition, the maximum absolute values of the Z-axis accelerations differ. This is because, as the steering angle increases while the front wheel assembly 11 is supported with a caster angle, the positions at which the wheel assemblies 11, 12 reach their uppermost points shift, and the Z-axis 27 tilts relative to the direction of gravitational force, thereby reducing the maximum value of gravitational acceleration detected along the Z-axis 27. Accordingly, by creating a map in advance correlating wheel angles with Z-axis acceleration, and comparing the Z-axis acceleration with the map, it is possible to determine whether each transmitter 21 is mounted to the front wheel assembly 11 or to the rear wheel assembly 12.

The map may correlate wheel angles with the Z-axis acceleration detected by the acceleration sensor 24 provided in the transmitter 21 of one of the front wheel assembly 11 and the rear wheel assembly 12. The map may correlate wheel angles with the Z-axis acceleration detected by the acceleration sensor 24 provided in each transmitter 21.

A case will now be described in which a map is used that correlates wheel angles with the Z-axis acceleration detected by the acceleration sensor 24 provided in either the transmitter 21 mounted to the front wheel assembly 11 or the transmitter 21 mounted to the rear wheel assembly 12. An example will be described in which the Z-axis acceleration detected by the acceleration sensor 24 provided in the transmitter 21 of the rear wheel assembly 12 is associated with the wheel angle.

The reception control unit 41 obtains transmission data transmitted from the transmitter 21 mounted to each of the wheel assemblies 11, 12, and obtains Z-axis accelerations from the transmission data. The reception control unit 41 also obtains a wheel angle from the second detection unit 18. The reception control unit 41 obtains, from the map, the Z-axis acceleration corresponding to the wheel angle obtained from the second detection unit 18. The reception control unit 41 compares the Z-axis acceleration obtained from the map with the Z-axis acceleration obtained from the transmission data. Among the Z-axis accelerations obtained from the transmission data, the reception control unit 41 determines that the Z-axis acceleration having the smaller difference from the Z-axis acceleration obtained from the map is the Z-axis acceleration detected by the acceleration sensor 24 provided in the transmitter 21 mounted to the rear wheel assembly 12. The reception control unit 41 determines that the ID code associated with that Z-axis acceleration is the ID code of the transmitter 21 mounted to the rear wheel assembly 12. The reception control unit 41 determines that the ID code that is not determined to be the ID code of the transmitter 21 mounted to the rear wheel assembly 12 is the ID code of the transmitter 21 mounted to the front wheel assembly 11. For example, when the wheel angle obtained from the second detection unit 18 is 270°, the Z-axis acceleration of the acceleration sensor 24 provided in the transmitter 21 mounted to the rear wheel assembly 12 is 0. The reception control unit 41 determines that, among the Z-axis accelerations obtained from the transmission data, the one closer to 0 is the Z-axis acceleration detected by the acceleration sensor 24 provided in the transmitter 21 mounted to the rear wheel assembly 12. The reception control unit 41 then determines that the ID code associated with the Z-axis acceleration closer to 0 is the ID code of the transmitter 21 mounted to the rear wheel assembly 12.

A case will now be described in which a map is used that correlates wheel angles with the Z-axis acceleration detected by the acceleration sensors 24 provided in the respective transmitters 21.

The reception control unit 41 obtains transmission data transmitted from the transmitter 21 mounted to each of the wheel assemblies 11, 12, and obtains Z-axis accelerations from the transmission data. The reception control unit 41 obtains the wheel angle from each of the first detection unit 17 and the second detection unit 18.

The reception control unit 41 obtains, from the map, the Z-axis acceleration corresponding to the wheel angle obtained from the first detection unit 17. Then, the reception control unit 41 compares the Z-axis acceleration corresponding to the wheel angle obtained from the first detection unit 17 with the Z-axis acceleration obtained from the transmission data. Among the Z-axis accelerations obtained from the transmission data, the reception control unit 41 determines that the Z-axis acceleration having the smaller difference from the Z-axis acceleration obtained from the map is the Z-axis acceleration detected by the acceleration sensor 24 provided in the transmitter 21 mounted to the front wheel assembly 11.

The reception control unit 41 obtains, from the map, the Z-axis acceleration corresponding to the wheel angle obtained from the second detection unit 18. Then, the reception control unit 41 compares the Z-axis acceleration corresponding to the wheel angle obtained from the second detection unit 18 with the Z-axis acceleration obtained from the transmission data. Among the Z-axis accelerations obtained from the transmission data, the reception control unit 41 determines that the Z-axis acceleration having the smaller difference from the Z-axis acceleration obtained from the map is the Z-axis acceleration detected by the acceleration sensor 24 provided in the transmitter 21 mounted to the rear wheel assembly 12.

### [Advantages of the Second Embodiment]

In addition to the advantages of the first embodiment, the second embodiment has the advantage described below.

(2-1) When the two-wheeled vehicle 10 is parked, the handlebar is locked by the handlebar lock mechanism 16. In this state, a difference occurs between the Z-axis acceleration detected by the acceleration sensor 24 provided in the transmitter 21 mounted to the front wheel assembly 11 and the Z-axis acceleration detected by the acceleration sensor 24 provided in the transmitter 21 mounted to the rear wheel assembly 12. There is a correlation between the wheel angle and the Z-axis acceleration. By creating a map that incorporates this correlation in advance, it is possible to determine whether each of the transmitters 21 is mounted to the front wheel assembly 11 or the rear wheel assembly 12 using the map.

### [Third Embodiment]

A transmitter, a receiver, a transmission/reception system, and a wheel position determination method according to a third embodiment will now be described. In the third embodiment, processes performed by the transmitters and the receiver are different from those in the first embodiment. The hardware configurations of the transmitters and the receiver are identical to those of the first embodiment.

Each transmission control unit 28 performs transmitter-side wheel position determination control. A more specific description will be given below.

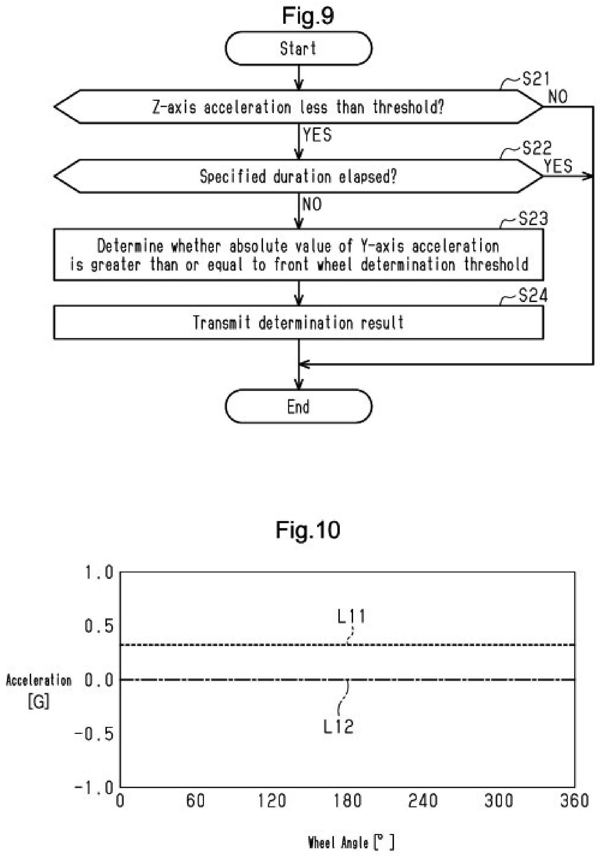

As shown in Fig. 9, in step S21, the transmission control unit 28 determines whether the Z-axis acceleration is less than a threshold. This determination is the same as the determination in step S1 of Fig. 5. Accordingly, the transmission control unit 28 determines whether the two-wheeled vehicle 10 is in a stopped state. If the determination result in step S21 is negative, the transmission control unit 28 terminates the transmitter-side wheel position determination control. If the determination result of step S21 is affirmative, the transmission control unit 28 proceeds to step S22.

In step S22, the transmission control unit 28 determines whether stopped time, during which the two-wheeled vehicle 10 is in a stopped state, exceeds a specified duration. This determination is the same as the determination in step S2 of Fig. 5. If the determination result in step S22 is negative, the transmission control unit 28 terminates the transmitter-side wheel position determination control. If the determination result of step S22 is affirmative, the transmission control unit 28 proceeds to step S23.

In step S23, the transmission control unit 28 determines whether the absolute value of the Y-axis acceleration is greater than or equal to a front wheel determination threshold. The front wheel determination threshold is a predetermined value. As described in the first embodiment, after the two-wheeled vehicle 10 is in a stopped state, the absolute value of the Y-axis acceleration detected by the acceleration sensor 24 provided in the transmitter 21 of the front wheel assembly 11 becomes greater than the absolute value of the Y-axis acceleration detected by the acceleration sensor 24 provided in the transmitter 21 of the rear wheel assembly 12. The front wheel determination threshold may be set as desired within a range between the absolute value of the Y-axis acceleration detected by the acceleration sensor 24 provided in the transmitter 21 mounted to the rear wheel assembly 12 and the absolute value of the Y-axis acceleration detected by the acceleration sensor 24 included in the transmitter 21 mounted to the front wheel assembly 11. When the absolute value of the Y-axis acceleration is greater than or equal to the front wheel determination threshold, the transmitter 21 is mounted to the front wheel assembly 11. When the absolute value of the Y-axis acceleration is less than the front wheel determination threshold, the transmitter 21 is mounted to the rear wheel assembly 12.

Next, in step S24, the transmission control unit 28 transmits the transmission data including the determination result of step S23 to the receiver 40. Specifically, the transmission control unit 28 transmits, to the receiver 40, data indicating whether the transmitter 21 is mounted to the front wheel assembly 11 or the rear wheel assembly 12. Since the transmission data includes the ID code, the determination result is associated with the ID code.

The reception control unit 41 obtains the determination result from the transmission data. It is thus possible to determine whether each of the transmitters 21 is mounted to the front wheel assembly 11 or the rear wheel assembly 12. The reception control unit 41 determines that the ID code associated with the determination result indicating that the transmitter 21 is mounted to the front wheel assembly 11 is the ID code of the transmitter 21 mounted to the front wheel assembly 11. The reception control unit 41 determines that the ID code that is not determined to be the ID code of the transmitter 21 mounted to the front wheel assembly 11 is the ID code of the transmitter 21 mounted to the rear wheel assembly 12.

### [Advantages of the Third Embodiment]

(3-1) The transmission control unit 28 determines whether each transmitter 21 is mounted to the front wheel assembly 11 by determining whether the absolute value of the Y-axis acceleration is greater than or equal to the front wheel determination threshold. Transmitting the determination result to the receiver 40 allows the reception control unit 41 to associate the ID codes with the respective wheel assemblies 11, 12.

### [Fourth Embodiment]

A transmitter, a receiver, a transmission/reception system, and a wheel position determination method according to a fourth embodiment will now be described. In the fourth embodiment, processes performed by the transmitters and the receiver are different from those in the first embodiment. The hardware configurations of the transmitters and the receiver are identical to those of the first embodiment.

### The stand 15 is a center stand.

The transmission control performed by each transmission control unit 28 is the same as in the second embodiment. Specifically, each transmission control unit 28 transmits transmission data including a Z-axis acceleration to the receiver 40 only when the Z-axis acceleration is less than a threshold.

The reception control unit 41 performs wheel position determination control. In steps S11 and S12, the reception control unit 41 performs the same processes as in the first embodiment. In step S13, the reception control unit 41 obtains the Z-axis accelerations from the transmission data.

In step S14, the reception control unit 41 determines which of the wheel assemblies 11 and 12 mounts each transmitter 21 to based on whether the obtained Z-axis acceleration has changed from a previous value. The reception control unit 41 determines, for each ID code, whether the Z-axis acceleration has changed from the previous value. The reception control unit 41 determines that the rear wheel assembly 12 mounts the transmitter 21 including the acceleration sensor 24 in which the Z-axis acceleration changes.

When the stand 15 is a center stand, parking the two-wheeled vehicle 10 causes the rear wheel assembly 12 to transition from a grounded state to a non-grounded state. As the rear wheel assembly 12 spins freely, the Z-axis acceleration varies. Since the front wheel assembly 11 does not rotate, only the Z-axis acceleration detected by the acceleration sensor 24 provided in the transmitter 21 of the rear wheel assembly 12 varies. The reception control unit 41 determines, for each ID code, whether the Z-axis acceleration obtained from the transmission data after the two-wheeled vehicle 10 has stopped varies. When, after the two-wheeled vehicle 10 is stopped, only one Z-axis acceleration varies, the reception control unit 41 determines that the ID code associated with that Z-axis acceleration is the ID code of the transmitter 21 mounted to the rear wheel assembly 12. The reception control unit 41 determines that the other ID code, which is different from the ID code determined to correspond to the transmitter 21 mounted to the rear wheel assembly 12, is the ID code of the transmitter 21 mounted to the front wheel assembly 11.

### [Advantages of the Fourth Embodiment]

(4-1) When the stand 15 is a center stand, parking the two-wheeled vehicle 10 causes the rear wheel assembly 12 to transition from a grounded state to a non-grounded state. As the rear wheel assembly 12 spins freely, the acceleration in the Z-axis direction varies. Since the front wheel assembly 11 does not rotate, only the acceleration in the Z-axis direction detected by the acceleration sensor 24 provided in the transmitter 21 of the rear wheel assembly 12 changes. The reception control unit 41 is capable of determining that the rear wheel assembly 12 is equipped with the transmitter 21 including the acceleration sensor 24 that detects the Z-axis acceleration, which changes after the two-wheeled vehicle 10 is stopped. Accordingly, the reception control unit 41 can determine which of the wheel assemblies 11, 12 mounts each of the transmitters 21.

### [Modifications]

The above-described embodiments may be modified as follows. The above-described embodiments and the following modifications can be combined as long as the combined modifications remain technically consistent with each other.
- In the first embodiment, the stand 15 may be a center stand. When the stand 15 is a center stand, the two-wheeled vehicle 10 is supported in an upright position. Accordingly, the tilt of the central axes of the wheel assemblies 11 and 12 relative to the horizontal direction is smaller than when the stand 15 is a side stand. Even when the stand 15 is a center stand, however, the tilt of the central axis of the front wheel assembly 11 relative to the horizontal direction is greater than the inclination of the central axis of the rear wheel assembly 12 relative to the horizontal direction.

In Fig. 10, a line L11 indicates the Y-axis acceleration of the acceleration sensor 24 provided in the transmitter 21 of the front wheel assembly 11, and a line L12 indicates the Y-axis acceleration of the acceleration sensor 24 provided in the transmitter 21 of the rear wheel assembly 12. As can be seen from Fig. 10, even when the stand 15 is a center stand, the absolute value of the Y-axis acceleration detected by the acceleration sensor 24 of the front wheel assembly 11 is greater than the absolute value of the Y-axis acceleration detected by the acceleration sensor 24 of the rear wheel assembly 12. Therefore, it is possible to determine whether each transmitter 21 is mounted to the front wheel assembly 11 or to the rear wheel assembly 12 by performing the wheel position determination control described in the first embodiment.
- In the first embodiment, the reception control unit 41 may determine, in step S14, that the front wheel assembly 11 mounts the transmitter 21 including the acceleration sensor 24 having an absolute value of the Y-axis acceleration greater than or equal to the front wheel determination threshold. **In** other words, the process performed by the transmission control unit 28 in the third embodiment may be performed by the reception control unit 41.
- In the first embodiment, each transmission control unit 28 may detect the Y-axis acceleration regardless of the Z-axis acceleration and may transmit transmission data including the Y-axis acceleration. In other words, the transmission control unit 28 may transmit, to the receiver 40, transmission data including the Y-axis acceleration even while the two-wheeled vehicle 10 is traveling.
- In the third embodiment, the transmission control unit 28 does not necessarily need to perform the determination in step S22. That is, when the determination result of step S21 is affirmative, the process of step S23 may be performed.
- In each of the embodiments, the acceleration sensor 24 does not necessarily need to include the X-axis 25.
- In each of the embodiments, the reference position of the rotor may be recognizable by the receiver 40 when each transmitter 21 transmits the transmission data at a specific wheel angle. Transmission of transmission data at a specific wheel angle may be performed, for example, based on acceleration detected by the acceleration sensor 24.

### REFERENCE SIGNS LIST

10) Two-Wheeled Vehicle; 11) Front Wheel Assembly; 12) Rear Wheel Assembly; 17, 18) Detection Units; 20) Transmission/Reception System; 21) Transmitter; 24) Acceleration Sensor; 28) Transmission Control Unit; 40) Receiver; 41) Reception Control Unit

## Claims

1. A receiver configured to receive transmission data transmitted from a transmitter mounted to each of two wheel assemblies of a two-wheeled vehicle, wherein
each of the transmitters includes an acceleration sensor configured to detect an acceleration in a Z-axis direction that is a centrifugal direction of the wheel assembly,
the receiver comprises a reception control unit, and
the reception control unit is configured to
determine that the two-wheeled vehicle is stopped,
obtain the acceleration detected by the acceleration sensor from the transmission data received by the receiver after the two-wheeled vehicle is stopped, and
determine, based on the acceleration, which of the wheel assemblies mounts each of the transmitters.

2. The receiver according to claim 1, wherein
each acceleration sensor is configured to detect an acceleration in a Y-axis direction that is an axial direction of the corresponding wheel assembly, and
the reception control unit is configured to
obtain an acceleration in the Y-axis direction from the transmission data received by the receiver after the two-wheeled vehicle is stopped, and
determine that the front wheel assembly mounts the transmitter including the acceleration sensor that detects a greater absolute value of the acceleration in the Y-axis direction.

3. The receiver according to claim 1, wherein
the two-wheeled vehicle includes detection units configured to detect rotation angles of the wheel assemblies, and
the reception control unit is configured to
obtain an acceleration in the Z-axis direction from the transmission data received by the receiver after the two-wheeled vehicle is stopped,
obtain the rotation angle from each detection unit after the two-wheeled vehicle is stopped, and
determine which wheel assembly mounts each transmitter by comparing the acceleration in the Z-axis direction obtained from the transmission data with a map correlating the rotation angle with the acceleration in the Z-axis direction.

4. The receiver according to claim 1, wherein
each acceleration sensor is configured to detect an acceleration in a Y-axis direction that is an axial direction of the corresponding wheel assembly, and
the reception control unit is configured to
obtain an acceleration in the Y-axis direction from the transmission data received by the receiver after the two-wheeled vehicle is stopped, and
determine that the front wheel assembly mounts the transmitter including the acceleration sensor that detects acceleration in the Y-axis direction having an absolute value greater than or equal to a front wheel determination threshold.

5. A receiver configured to receive transmission data transmitted from a transmitter mounted to each of two wheel assemblies of a two-wheeled vehicle, wherein
the two-wheeled vehicle includes a center stand,
each of the transmitters includes an acceleration sensor configured to detect an acceleration in a Z-axis direction that is a centrifugal direction of the wheel assembly,
the receiver comprises a reception control unit, and
the reception control unit is configured to
determine that the two-wheeled vehicle is stopped,
obtain an acceleration in the Z-axis direction from the transmission data received by the receiver after the two-wheeled vehicle is stopped, and
determine that the rear wheel assembly mounts the transmitter including the acceleration sensor that detects the acceleration in the Z-axis direction, which changes after the vehicle is stopped.

6. A transmitter mounted to each of two wheel assemblies of a two-wheeled vehicle, comprising:
an acceleration sensor configured to detect an acceleration in a Y-axis direction that is an axial direction of the wheel assembly and an acceleration in a Z-axis direction that is a centrifugal direction of the wheel assembly; and
a transmission control unit,
wherein the transmission control unit is configured to
detect the acceleration in the Y-axis direction when the acceleration in the Z-axis direction is less than a threshold, and
transmit transmission data including the acceleration in the Y-axis direction to a receiver, thereby causing the receiver to determine, based on the acceleration in the Y-axis direction, which of the wheels mounts the transmitter.

7. A transmitter mounted to each of two wheel assemblies of a two-wheeled vehicle, comprising:
an acceleration sensor configured to detect an acceleration in a Y-axis direction that is an axial direction of the wheel assembly and an acceleration in a Z-axis direction that is a centrifugal direction of the wheel assembly; and
a transmission control unit,
wherein the transmission control unit is configured to
determine that the two-wheeled vehicle is stopped based on the acceleration in the Z-axis direction,
obtain the acceleration in the Y-axis direction from the acceleration sensor after the two-wheeled vehicle is stopped, and
determine whether an absolute value of the acceleration in the Y-axis direction is greater than or equal to a front wheel determination threshold, and transmit a determination result to a receiver.

8. A transmission/reception system, comprising:
a transmitter mounted to each of two wheel assemblies of a two-wheeled vehicle; and
a receiver configured to receive transmission data transmitted from the transmitter, wherein
each of the transmitters includes an acceleration sensor configured to detect an acceleration in a Z-axis direction that is a centrifugal direction of the wheel assembly,
the receiver comprises a reception control unit, and
the reception control unit is configured to
determine that the two-wheeled vehicle is stopped,
obtain the acceleration detected by the acceleration sensor from the transmission data received by the receiver after the two-wheeled vehicle is stopped, and
determine, based on the acceleration, which of the wheel assemblies mounts each of the transmitters.

9. A wheel position determination method of determining, using a receiver, which of two wheel assemblies of a two-wheeled vehicle mounts a transmitter mounted on each of the two wheel assemblies, the method comprising:
transmitting, by each of the transmitters, transmission data including acceleration;
receiving, by the receiver, the transmission data;
determining, by the receiver, that the two-wheeled vehicle is stopped;
obtaining, by the receiver, the acceleration from the transmission data received by the receiver after the two-wheeled vehicle is stopped; and
determining, by the receiver, based on the acceleration, which of the wheel assemblies mounts each of the transmitters.
